# EUROPEAN PATENT APPLICATION

(11) **EP 2 868 470 A1**
(43) Date of publication of application: **06.05.2015**
(21) Application number: 14460080.6
(22) Date of filing: 03.11.2014
(51) Int. Cl.: B32B 29/08, B31D 3/00

(54) **A method of manufacturing of a light construction support and the light construction support itself**

(30) Priority: 04.11.2013 PL 40589213
(71) Applicant: Firma Produkcyjno-Handlowa SEPPA s.c. GIL Jerzy WEGRZYN Pawel, 87-140 Chelmza (PL)
(72) Inventor: Wegrzyn, Pawel, 87-140 Chelmza (PL); Gil, Jerzy, 87-140 Chelmza (PL)

(57) **Abstract**

The object of the patent is a method of manufacturing of a light construction support (1) and the light construction support itself (1), especially made of cardboard or paper and/or paper. The patent is applicable, among others, in manufacturing empty space fillers, e.g. in packaging, in transport, and is also applicable in manufacturing light supports or platforms.

Light construction support (1), especially made of cardboard, especially made of corrugated board (3'), where two successive layers coming sequentially one after the other are spatially different. The pile of semi-finished products (3), that it is composed of has a given spatial shape and can be wrapped with dust cover (5). double-layer corrugated board (3') has the height of corrugation (9) adequate to at least the height of corrugation profile B and at the same time it has separation (8) adequate to corrugation of another type, preferably not larger than the separation of corrugation type D. It would be best if the separation (8) of the corrugation manufactured with respect to the selection of the height (9) of corrugation is adequate to the separation of corrugation of a lower level. It is the best option if the pile (4) of semi-finished products (3) is is formed each time with the same alternating flat (7) and corrugated (6) layers, in the same direction, into a single light construction support (1), where one m³ contains the maximum of 800m² paper (2'), and preferably less than 750m² paper (2').

## Description

The object of the patent is a method of manufacturing of a light construction support and the light construction support itself, especially made of cardboard or paper. The patent is applicable, among others, in manufacturing empty space fillers, e.g. in packaging, in transport, and is also applicable in manufacturing light supports or platforms.

It is common knowledge that for the abovementioned applications, especially for empty space fillers, the following are alternatively used - polyurethane foams, expanded polystyrene, bubble wrap, cardboard and especially corrugated board. Polyurethane foams and bubble wraps have great shock absorption properties, however, in most cases they do not provide stiffness. If they achieve this property as well, it turns out that it is only because of their high density or thickness, which makes these fillers difficult to utilise, manufacturing requires large technological expenditure, and the cost of manufacturing itself is also significant. Despite that, they still do not have the strength that could sustain heavy weights as a platform or support. Therefore, flat or box-shapes cardboard is used more often to serve both those functions. Boxes made of cardboard are rigid in contrast with bubble wrap and polyurethane foam, however, they can be easily crushed, unless they are made of multi-layer cardboard, especially corrugated board. This in turn results in significant expenditure in technological operations to produce the shape appropriate for the filling. Therefore, the best material for the light construction support is multi-layer corrugated board, which allows to obtain the filling shape after appropriate cutting and placing along the direction of corrugation of the multi-layer corrugated board, which remains quite rigid and at the same time it has shock absorbing properties. With perpendicular arrangement, to the direction of corrugation of the multi-layer corrugated board, significant resistance to crushing is maintained, this resistance is better with more layers of the multi-layer corrugated board in the light construction support.

From the patent application PL388901 the five-layer corrugated board and the method of manufacturing of the five-layer corrugated board are known, where in the first and second single gluer the first and the second double-layer corrugated boards are glued respectively from a layer of corrugated paper and a flat layer of paper, in the double gluer a flat layer of the second double-layer corrugated board is glued to the uncovered side of the layer of the first double-layer corrugated board, a layer of flat paper is glued to the layer of the second double-layer corrugated board, where in the first and second single gluers starch glue is used first, which has increased resistance to water, which after being applied onto the corrugated layer of paper is heated with infrared light up to the temperatures of 85 to 90°C, whereas in the double gluer another starch glue is used with an appropriate additive, which after being applied onto the uncovered side of the corrugated layer of the first and second double-layer corrugated board, is heated with infrared light up to the temperatures of 85 to 90°C.

From the patent application PL394041 an analogous method of manufacturing three-layer corrugated board is known, according to which in a single gluer double-layer corrugated board is glued from a layer of corrugated paper and the first layer of flat paper, and then in a double gluer the second layer of flat paper is glued to the uncovered side of the layer of the double-layer corrugated board. In the single and double gluers the first and second starch glue is used, which has increased resistance to water, and the process of gluing is identical to the previous gluing.

The described processes present the generally applied method for manufacturing multi-layer corrugated board, which is using multiple single gluers in the number of at least as many as corrugated layers there are in the final multi-layer corrugated board. Therefore, very seldom is the corrugated board manufactured with more than seven single layers, flat and corrugated alternately, placed on top of one another.

From the patent application PL394042 a method of manufacturing packaging made of corrugated board is known, according to which corrugated board sheets are taken from sheet feeder, they are cut, glued and preliminary folded in a flat form. The board sheets are made of corrugated board containing a corrugated layer placed between the first external flat layer and the second external flat layer. Therefore, it is in turn pointed that joining a number of multi-layer board is possible and known, even after they were previously cut to the desired format, however, in places where they are in contact there are flat layers next to one another.

From the patent application PL397669 the method manufacturing cardboard supports is known, where in a single process a finished board is sequentially fed from the side of entrance through the feeder module, next in the cutting module the board is cut to the shape of a form factor, in the module for covering with glue the cut form factors are covered with glue, next the form factors are transported through the transport module of the negative pressure table to the module for joining of the tray with the insert, and then as a finished product the cardboard supports are placed in a pile. However, the presented process first requires the process of manufacturing of the multi-layer board to be conducted first, and the shape of the form factor is determined by the shape of the tray, where it is most favourable that in the process a board support is created in the shape of a rectangular prism.

And finally, from the patent application PL397775 a cardboard block and the process of manufacturing it is known, where one spatially formed layer is glued to one flat layer, and then it is cut with bridging, the sheets are glued, and by folding the final shape of the block is obtained. Whereas, the block is characterised by having exactly one flat layer between each two adjacent spatially formed layers.
The described solution allows to produce a lighter block and using less material. This method allows to produce a block in a single technological process line, without the need to use finished sheets of multilayer corrugated board. It is also possible for making such blocks made of corrugated board to use, interchangeably or jointly, different shapes of corrugations, e.g. sinusoidal, triangular, trapezoidal, rectangular.

Among generally accepted standards known in manufacturing corrugated boards, there are at least three parameters given for the corrugation profile, that is, the height and the separation of the corrugation, the corrugation coefficient. Certain supports have assigned letter names of possible corrugation profiles that can be used. Not every corrugation can be freely shaped, because exceeding certain values of the corrugation height for the corresponding corrugation makes the multilayer corrugated board useless for any product that could be practically used. Therefore, corrugations of the B, C and E profiles are used most often, whereas it is very rarely that profiles A, D, F, G, K, N, O are used.

A list of known and used corrugation types with correlating parameters is presented in table no. 1.

**Table 1**

| **Corrugation type** | **Corrugation coefficient** | **Height [mm]** | **Separation** [**mm**] |
|---|---|---|---|
| O | 1.14 | 0.3 | 1.2 |
| N | 1.11 - 1.8 | 0.4 - 0.5 | 1.8 |
| G | 1.17 | 0.5 | 1.8 |
| F | 1.19 - 1.28 | 0.7 - 0.8 | 2.4 - 2.5 |
| E | 1.20 - 1.35 | 1.1 - 1.4 | 3.2 - 3.7 |
| B | 1.26 - 1.48 | 2.3 - 2.8 | 6.1 - 6.6 |
| C | 1.36 - 1.56 | 3.4 - 4.0 | 7.4 - 8.3 |
| A | 1.37 - 1.53 | 4.1 - 4.7 | 8.7 - 9.5 |
| K | 1.50 | 5.94 | 11.7 |
| D | 1.48 | 7.38 | 15.0 |

The most important parameter for strength is the corrugation coefficient, which can be directly converted into m2 of paper used for manufacturing of the corrugated board, for one m3 of the multilayer corrugated board with a given corrugation profile. As a rule, the higher the corrugation, the larger the corrugation coefficient must be in order to maintain the strength parameters of the multilayer corrugated board. A combination of corrugation profiles is used to increase the possible allowed height of corrugation with the same resistance to crushing of the multilayer corrugated board, however, this makes the manufacturing process more difficult for products made of such board, it also changes the properties of this product to ones that are difficult to determine in any selected point, and it surely results in non-linear character of physical and strength parameters of the product.

Conversion factors mentioned above are presented in min/max range in table no. 2:

**Table 2**

| Corrugation height [mm] | | Corrugation coefficient | Amount of corrugated paper in m2 | Amount of flat paper in m2 | Total m2 of paper in m3 of multilayer corrugated board. |
|---|---|---|---|---|---|
| corrugation E lower limit of corrugation height | 1.1 | 1.2 | 1818 | 1090.8 | 2908.8 |
| corrugation E upper limit of corrugation height | 1.4 | 1.35 | 1428 | 963.9 | 2391.9 |
| corrugation B lower limit of corrugation height | 2.3 | 1.26 | 869 | 547 | 1416 |
| corrugation B upper limit of corrugation height | 2.8 | 1.48 | 714 | 528 | 1242 |
| corrugation C lower limit of corrugation height | 3.4 | 1.36 | 588 | 400 | 988 |
| corrugation C upper limit of corrugation height | 4 | 1.56 | 500 | 390 | 890 |
| corrugation BE lower limit of corrugation height | 3.4 | corrugation E - 1.2 | 882 | 722 | 1604 |
| | | corrugation B - 1.26 | | | |
| corrugation BE upper limit of corrugation height | 4.2 | corrugation E - 1.35 | 714 | 673 | 1387 |
| | | corrugation B - 1.48 | | | |
| corrugation BC lower limit of corrugation height | 5.7 | corrugation B - 1.26 | 526 | 459 | 985 |
| | | corrugation C - 1.36 | | | |
| corrugation BC upper limit of corrugation height | 6.8 | corrugation B - 1.26 | 441 | 385 | 826 |
| | | corrugation C - 1.36 | | | |

Based on the data presented above, and also considering the presented known solutions it is to be assumed that technological processes, during which products of the filler type, platforms, supports, etc., are made of multilayer corrugated board, are complicated, they require large machinery resources, and the products themselves are not light and are not easily utilised. The data presented above shows that using combinations of corrugations seems to be the most favourable for such types of products, however, there is a significant disadvantage of such use, namely, nonlinearity of parameters, unnecessary diversification of machines for manufacturing, the necessity of combining different technological processes.

The objective of this solution according to the patent is to simplify the technology of manufacturing numerous products with practical application made of multilayer corrugated board, at the same time maintaining good strength parameters for a significantly reduced weight of such products in comparison with currently used and known on the market.

The method of manufacturing of the light construction support, especially made of cardboard and/or paper, according to the invention, is done in a single process where base material is fed from the entrance side, semi-finished products of desired shape are cut or die cut from cardboard, which are fed sequentially and are joined together by gluing and putting in a pile which can be wrapped with dust cover. The base material is flat paper fed from two sources, and in the same process double-layer corrugated board is produced from it, which is a semi-finished product, and the pile of semi-finished products is formed each time with the same alternating flat and corrugated layers, in the same direction, into a single light construction support. This method is characterised by the fact that the corrugated layer manufactured in this process has the corrugation height adequate at least to the height of the corrugation profile B and is profiled to the corrugation height equal to 25mm where one m3 of the light construction support is manufactured using the maximum of 800m² paper, preferably using the maximum 750m² paper. Flat paper can be fed in the form of a sheet or from paper tape or from a roll. Preferably the flat paper is fed from each source independently, where regardless of the number of layers, the type of corrugation is preferably identical. The process is carried out by one single gluer, the process of gluing semi-finished products together is preferably carried out using aqueous glue, and the process of gluing double-layer corrugated board is preferably carried out using starch glue. Any glue that was used can be applied in a layered way and/or pointwise and/or linearly. Corrugated layers can be positioned relative to one another at an angle ranging from 0° to 90°. Semi-finished products are preferably cut in a regular shape, such as: circle, ellipsis, oval, rectangle, triangle, trapezoid, polygon, star, or preferably cut in an irregular shape. Regardless of the height of corrugations used in the process of manufacturing double-layer corrugated board, it preferably has corrugation separation not larger than the corrugation separation D, and it would be best if the separation of the manufactured corrugation height correlated with the corrugation separation of a lower level.

According to the invention, light construction support, as a pile of semi-finished products is constructed each time with the same layer, flat and corrugated alternately, in one direction, it is made of cardboard and/or made of paper, and in particular made of corrugated board, where successive adjacent layers coming one after the other are spatially different. The pile of semi-finished products has a given shape and can possibly be wrapped in dust cover. The invention is characterised by fact that double-layer corrugated board, which is a semi-finished product, has the height of corrugation adequate at least to the height of the B-type corrugation profile and at the same time it has separation adequate to corrugation of another type, preferably not larger than the value of corrugation separation type D. The best option is when the separation of the corrugation height corresponds to corrugation separation of a lower level. Where one m3 contains the maximum of 800m² paper, preferably it is less than 750m² paper. Corrugated layers can be placed relative to one another at an angle between 0° to 90°. The light construction support is preferably made of cardboard containing the corrugated layers with the height of the corrugation up to 25mm, and also it is preferable if it is manufactured using cardboard containing uniform corrugated layers. Glue can be applied onto the base material or onto the semi-finished product in a layered way and/or pointwise and/or linearly. At least one of its cross-sections, especially the one that is parallel to the placement of semi-finished products, it can have a regular shape, such as: circle, ellipsis, oval, rectangle, triangle, trapezoid, polygon, star, or cut in an irregular shape. The first glue for joining the base material is preferably starch glue, and the second glue for joining semi-finished products is preferably aqueous glue. The corrugated layer is in cross-section in a shape of a sinusoid or triangle or trapezoid or rectangle. The number of different successive layers, which the light construction support is made of, counted sequentially, preferably is at least 7, and preferably there are more flat layers than corrugated layers. Preferably, the thickness of the light construction support is measured along glued layers between 0.01m and 2.0m, preferably between 0.05m and 0.50m, and the surface of a single flat layer of the light construction support is preferably between 0.001m² and 5.0m², preferably between 0.1m² and 1.0m².

According to the invention, the advantage is the fact that the light construction support can be freely spatially shaped, which is often legitimate for filling empty spaces in packaging containing the product. Another advantage is the possibility to make aesthetic shapes of supports, legs, bases, platforms manufactured in this way, which does not negatively influence the strength and functionality of such manufacturing technology and the product resulting from it. Above all, there is an advantage of the possibility to use different properties of the light construction support, depending on the direction of arrangement. In the direction of placed layers it displays shock absorbing properties, whereas in the perpendicular direction to the arrangement of layers it displays the property of large resistance to crushing. The advantage of gluing semi-finished products using aqueous glue is longer time of desiccating, which allows to precisely position the layers and possible correction if it is positioned incorrectly, and the advantage of gluing double-layer corrugated board using starch glue is quick and solid joining of the base material into inseparable cardboard.

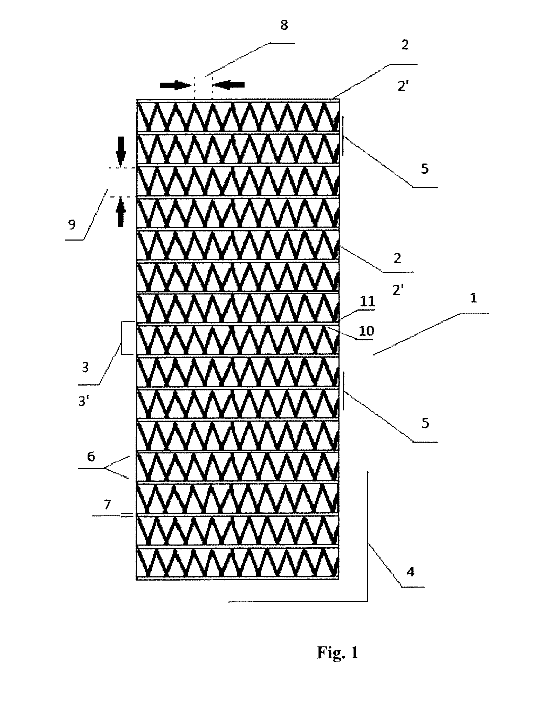

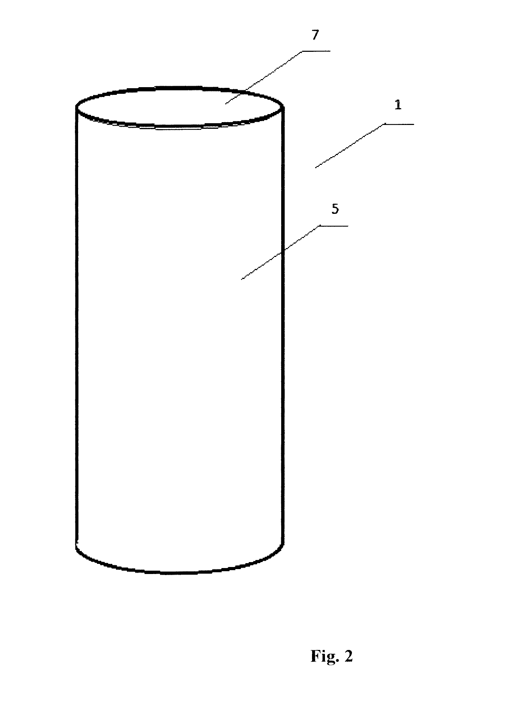

The solution according to the invention is presented in an example in drawings, where Figure 1 presents light construction support in a vertical cross-section through all the layers used to manufacture it, and Figure 2 presents light construction support in from a perspective.

An example method of manufacturing of the light construction support 1 especially made of cardboard, is that in a single process, base material is fed from the entrance side 2, semi-finished products are die cut from cardboard 3 of desired shape, which are fed sequentially and are joined together using glue and placed in a pile 4, which is wrapped with dust cover 5. The base material 2 is flat paper 2' fed from two sources, and in the same process double-layer corrugated board is produced from it 3', which is a semi-finished product 3 of corrugation height of 0.01m, and the pile of semi-finished products 3 is each time placed with the corrugated layer 6 facing one side, into a single light construction support 1, where one m³ of it is made of 500m² paper. Flat paper 2' is fed in the form of paper tape. Flat paper 2' is fed independently from each source. Regardless of the number of layers 6,7, the type of corrugation of the corrugated layer 6 is identical, and adjacent flat layers 7 are placed parallel relative to one another, and corrugated layers 6 are shifted relative to one another at an angle of 0°. The process is carried out using one single gluer, the process of gluing semi-finished products 3 with one another is carried out using aqueous glue 11, and the process of gluing double-layer corrugated board 3' is carried out using starch glue 10. Any of the used glues 10,11 is applied linearly. Semi-finished products 3 are die cut into a regular shape as an ellipsis. Separation 8 of the corrugation manufactured with respect to the selection of the height 9 of corrugation is adequate to the separation 8 of corrugation of a lower level and amounts to 0.005m.

An example light construction support 1, is made of double-layer corrugated board 3', where successive layers 6,7 coming alternately one after the other are spatially different. Corrugated layers 6 are uniform. The glue 10,11 is applied linearly. At least one cross-section of the light construction support 1, parallel to the position of semi-finished products 3, has the regular shape of an ellipsis. The first glue 10 joining base material 2 is starch glue, and the second glue 11 joining semi-finished products 3 is aqueous glue. The corrugated layer 6 in the cross-section along the corrugation direction is triangular. The number of different layers 6,7 coming one after another, from which the light construction support 1 is built, counted sequentially, is thirty-one, where there are more flat layers 7 than corrugated layers 6. The light construction support 1 has the thickness of 0.166m measured along the glued layers 6,7, where the thickness of a single layer of paper 2' is 0.001m and the surface of a single flat layer 7 of the light construction support 1 is 0.05m².

## Claims

1. The method of manufacturing of the light construction support, especially made of cardboard and/or paper, where in a single process base material is fed from the entrance side, semi-finished products of desired shape are cut or die cut from cardboard, which are fed sequentially and are joined together by gluing and putting in a pile, which can be wrapped with dust cover, and the base material is flat paper fed from two sources, and in the same process double-layer corrugated board is produced from it, which is a semi-finished product, and the pile of semi-finished products is formed each time with the same alternating flat and corrugated layers, in one direction, into a single light construction support, **characterised in that** the corrugated layer (6) produced in this process has the height (9) of corrugation adequate at least to the height of the corrugation profile B and is profiled to the corrugation height (9) equal to 25mm, where one m³ of the light construction support (1) is manufactured using the maximum of 800m² paper, preferably using the maximum 750m² paper, and the process is carried out using one single gluer

2. The method of manufacturing light construction support in accordance with claim 1, **characterised in that** the glue (10,11) is applied in a layered way and/or pointwise and/or linearly

3. The method of manufacturing light construction support in accordance with claim 1 or claim 2, **characterised in that** corrugated layers (6) are placed relative to one another at an angle between 0° to 90°.

4. The method of manufacturing light construction support in accordance with claim 1 or claim 2 or claim 3, **characterised in that** regardless of the height (9), the type of corrugation used in the process of manufacturing double-layer corrugated board (3'), has separation (8) of this corrugation not larger than the separation of the type D corrugation, in particular separation (8) manufactured with respect to the selection of the height (9) of corrugation is adequate to the separation of corrugation of a lower level.

5. Light construction support, as a pile of semi-finished products is constructed each time with the same layer, flat and corrugated alternately, in one direction, especially made of cardboard and/or made of paper, and in particular made of corrugated board, where successive adjacent layers coming one after the other are spatially different, and the pile of semi-finished products that it is composed of has a given spatial shape and can be wrapped with dust cover, **characterised in that** the double-layer corrugated board (3') has the height of corrugation (9) adequate to at least the height of corrugation profile B and at the same time it has separation (8) adequate to corrugation of another type, preferably not larger than the separation of corrugation type D, especially separation (8) of the manufactured with respect to the selection of the height (9) of corrugation is adequate to the separation of corrugation of a lower level, where one m³ contains the maximum of 800m² paper (2'), preferably it is less than 750m² paper (2')

6. Light construction support in accordance with claim 5, **characterised in that** it is made of cardboard containing corrugated layers (6) of the height (9) of corrugation preferably up to 25mm

7. Light construction support in accordance with claim 5 or claim 6, **characterised in that** it is made of cardboard containing uniform corrugated layers (6)

8. Light construction support in accordance with claim 5 or claim 6 or claim 7, **characterised in that** the glue (10,11) is applied onto the base material (2) or onto the semi-finished product (3) in a layered way and/or pointwise and/or linearly

9. Light construction support in accordance with any claims between claims 5 and 8, **characterised in that** at least one of its cross-sections, especially parallel to the arrangement of semi-finished products (3), has a regular shape, such as: circle, ellipsis, oval, rectangle, triangle, trapezoid, polygon, star, or can have an irregular shape.

10. Light construction support in accordance with any claims between claims 5 and 9, **characterised in that** the first glue (10) joining the base material (2) is starch glue

11. Light construction support in accordance with any claims between claims 5 and 10, **characterised in that** the second glue (11) joining semi-finished products (3) is aqueous glue

12. Light construction support in accordance with any claims between claims 5 and 11, **characterised in that** the corrugated layer (6) has a cross-section shape of a sinusoid or triangular or trapezoidal or rectangular

13. Light construction support in accordance with any claims between claims 5 and 12, **characterised in that** the number of different layers (6,7) placed one after another, from which the light construction support (1) is made, measured sequentially, is at least 7, where preferably there are more flat layers (7) than corrugated layers (6)

14. Light construction support in accordance with any claims between claims 5 and 13, **characterised in that** its thickness measured along the glued layers (6,7) is between 0.01m and 2.0m preferably between 0.05m and 0.50 m

15. Light construction support in accordance with any claims between claims 5 and 14, **characterised in that** the area of a single flat layer (7) is between 0.001m² and 5.0m², preferably between 0.1m² and 1m²

16. Light construction support in accordance with any claims between claims 5 and 15, **characterised in that** the corrugated layers (6) are placed relative to one another at an angle between 0° to 90°
